# NEUE EUROPÄISCHE PATENTSCHRIFT

(11) **EP 0 788 516 B2**
(45) Veröffentlichungstag und Bekanntmachung des Hinweises auf die Entscheidung über den Einspruch: **30.10.2002**
(45) Hinweis auf die Patenterteilung: 29.07.1998
(21) Anmeldenummer: 95935455.6
(22) Anmeldetag: 17.10.1995
(51) Int. Cl.: C08B 31/00, C08B 35/00, D21H 17/29, D21H 21/20

(54) **VERFAHREN ZUR KATIONISCHEN MODIFIZIERUNG VON STÄRKE UND VERWENDUNG DER KATIONISCH MODIFIZIERTEN STÄRKE**
CATIONIC MODIFICATION PROCESS FOR STARCH AND USE OF CATIONICALLY MODIFIED STARCH
PROCEDE DE MODIFICATION CATIONIQUE D'AMIDON ET UTILISATION D'AMIDON CATIONIQUEMENT MODIFIE

(30) Priorität: 29.10.1994 DE 4438708
(43) Veröffentlichungstag der Anmeldung: 13.08.1997
(73) Patentinhaber: BASF AKTIENGESELLSCHAFT, 67056 Ludwigshafen (DE)
(72) Erfinder: LINHART, Friedrich, D-69123 Heidelberg (DE); STANGE, Andreas, D-68199 Mannheim (DE); SCHUHMACHER, Rudolf, D-67459 Böhl-Iggelheim (DE); HARTMANN, Heinrich, D-67117 Limburgerhof (DE); DENZINGER, Walter, D-67346 Speyer (DE); NIESSNER, Manfred, D-67105 Schifferstadt (DE); NILZ, Claudia, D-67127 Rödersheim-Gronau (DE); REUTHER, Wolfgang, D-69118 Heidelberg (DE); MEIXNER, Hubert, D-67069 Ludwigshafen (DE)
(74) Vertreter: Riedl, Peter, Dr.
(86) Internationale Anmeldenummer: EP9504075
(87) Internationale Veröffentlichungsnummer: WO96013525

(56) Entgegenhaltungen:
- EP-B- 0 282 761
- EP-B- 0 301 372
- EP-B- 0 418 343
- WO-A-90/11404
- US-A- 3 674 725
- US-A- 4 097 427
- Ullmanns Encyklopädie der technischen Chemie, 16. Band, S. 322 (1965)
- Wochenblatt für Papierfabrikation 4, S. 109-168 (1991)

## Beschreibung

Die Erfindung betrifft ein Verfahren zur kationischen Modifizierung von Starke durch Umsetzung von Starke mit Polymeren, die Amino- und/oder Ammoniumgruppen enthalten in wäßrigem Medium bei Temperaturen oberhalb der Verkleisterungstemperatur der Stärke in Abwesenheit von Oxidationsmitteln, Polymerisationsinitiatoren und Alkali.

Zur Erhöhung der Trockenfestigkeit von Papier, ist z.B. aus Ullmanns Encyklopädie der technischen Chemie, 4. Auflage, Verlag Chemie, Weinheim - New York, 1979, Band 17, Seite 581, bekannt, wäßrige Anschlammungen von nativen Stärken, die durch Erhitzen in eine wasserlösliche Form überführt werden, als Massezusatz bei der Herstellung von Papier zu verwenden. Die Retention der in Wasser gelösten Stärken an die Papierfasern im Papierstoff ist jedoch gering. Eine Verbesserung der Retention von Naturprodukten an Cellulosefasem bei der Herstellung von Papier ist beispielsweise aus der US-A-3 734 820 bekannt. Darin werden Pfropfcopolymerisate beschrieben, die durch Pfropfen von Dextran, einem in der Natur vorkommenden Polymerisat mit einem Molekulargewicht von 20.000 bis 50 Millionen, mit kationischen Monomeren, z.B. Diallyldimethylammoniumchlorid, Mischungen aus Diallyldimethylammoniumchlorid und Acrylamid oder Mischungen aus Acrylamid und basischen Methacrylaten, wie Dimethylaminoethylmethacrylat, hergestellt werden. Die Pfropfpolymerisation wird vorzugsweise in Gegenwart eines Redoxkatalysators durchgeführt.

Aus der US-A-4 097 427 ist ein Verfahren zur Kationisierung von Stärke bekannt, bei dem man die Stärkekochung in einem alkalischen Medium in Gegenwart von wasserlöslichen quaternären Ammoniumpolymerisaten und eines Oxidationsmittels durchführt. Als quaternäre Ammoniumpolymerisate kommen u.a. auch quaternisierte Diallyldialkylaminopolymerisate oder quaternisierte Polyethylenimine in Betracht. Als Oxidationsmittel verwendet man beispielsweise Ammoniumpersulfat, Wasserstoffperoxid, Natriumhypochlorit, Ozon oder tert.-Butylhydroperoxid. Die auf diese Weise herstellbaren modifizierten kationischen Stärken werden als Trockenverfestigungsmittel bei der Herstellung von Papier dem Papierstoff zugegeben. Jedoch wird das Abwasser durch einen sehr hohen CSB-Wert (chemischer SauerstoffBedarf) belastet.

Aus der US-A-4 146 515 ist ein Verfahren zur Herstellung von kationischer Starke bekannt, die für Oberflachenleimung und Beschichtung von Papier- und Papierprodukten verwendet wird. Gemäß diesem Verfahren wird eine wäßrige Anschlämmung von oxidierter Stärke zusammen mit einem kationischen Polymeren in einem kontinuierlichen Kocher aufgeschlossen. Als kationische Polymere kommen Kondensate aus Epichlorhydrin und Dimethylamin, Polymerisate von Diallyldimethylammoniumchlorid, quaternisierte Reaktionsprodukte von Ethylenchlorid und Ammoniak, quaternisiertes Polyethylenimin sowie quaternisiertes Polyepichlorhydrin in Betracht.

Aus der US-A-3 467 608 ist ein Verfahren zur Herstellung einer kationischen Stärke bekannt, bei dem man eine Aufschlämmung von Stärke in Wasser zusammen mit einem Polyalkylenimin oder Polyalkylenpolyamin mit einem Molekulargewicht von mindestens 50.000 etwa 0,5 bis 5 Stunden lang auf eine Temperatur von etwa 70 bis 110°C erhitzt. Die Mischung enthält 0,5 bis 40 Gew.-% Polyalkylenimin oder Polyalkylenpolyamin und 99,5 bis 60 Gew.-% Stärke. Gemäß Beispiel 1 wird ein Polyethylenimin mit einem durchschnittlichen Molekulargewicht von etwa 200.000 in verdünnter wäßriger Lösung mit Kartoffelstärke 2 Stunden lang auf eine Temperatur von 90°C erhitzt. Die modifizierte Kartoffelstärke kann in einer Mischung aus Methanol und Diethylether ausgefällt werden. Die in der US-A-3 467 608 beschriebenen Reaktionsprodukte aus Stärke und Polyethylenimin bzw. Polyalkylenpolyaminen werden als Flockungsmittel verwendet.

Aus der EP-A-0 282 761 und der DE-A-3 719 480 sind Herstellungsverfahren für Papier, Pappe und Karton mit hoher Trockenfestigkeit bekannt. Bei diesem Verfahren werden als Trockenverfestiger Umsetzungsprodukte eingesetzt, die durch Erhitzen von nativer Kartoffelstärke mit kationischen Polymeren wie Vinylamin-, N-Vinylimidazolinoder Diallyldimethylammonium-Einheiten enthaltenden Polymeren bzw. Polyethylenimine in wäßrigem Medium auf Temperaturen oberhalb der Verkleisterungstemperatur der Stärke in Abwesenheit von Oxidationsmitteln, Polymerisationsinitiatoren und Alkali erhältlich sind.

Aus der EP-B-0 301 372 ist ein ebensolcher Prozeß bekannt, bei dem entsprechend modifizierte, enzymatisch abgebaute Starken zum Einsatz kommen. Unter den dort abgegebenen Aufschlußbedingungen für native Starke wird neben einem unvollständigen Aufschluß (spektroskopische Untersuchungen zeigen ungelöste, teilweise nur angequollene Stärkekörner) auch eine größere Menge an Abbauprodukten (Abbauraten > 10 %) gefunden.

Aus der US-A-4 880 497 und der US-A-4 978 427 ist ein Verfahren zur Herstellung von Papier mit hoher Trockenund Naßfestigkeit bekannt, bei dem man entweder auf die Oberfläche des Papiers oder zum Papierstoff vor der Blattbildung ein hydrolysiertes Copolymerisat als Verfestigungsmittel zusetzt, das durch Copolymerisieren von N-Vinylformamid und ethylenisch ungesättigten Monomeren, wie beispielsweise Vnylacetat, Vinylpropionat oder Alkylvinylether und Hydrolysieren von 30 bis 100 mol-% der Formylgruppen des Copolymerisats unter Bildung von Aminogruppen erhältlich ist. Die hydrolysierten Copolymeren werden in Mengen von 0,1 bis 5 Gew.-%, bezogen auf trockene Fasern, eingesetzt.

Aus der DE-A-4 127 733 sind hydrolysierte Pfropfpolymerisate von N-Vinylformamid und Saccharidstrukturen enthaltenden Naturstoffen bekannt, die als Trocken- und Naßverfestigungsmittel Anwendung finden. Die Hydrolyse der Pfropfpolymeren unter sauren Bedingungen hat jedoch einen starken Molekulargewichtsabbau der Saccharide zur Folge.

Aus der FR-A-2054739 ist ein Verfahren zur Umsetzung von Stärke mit Polyaminen bekannt, die eine Molmasse von mindestens 1000 haben. Die Umsetzung wird in wäßriger Suspension bei Temperaturen von 60 bis 121°C innerhalb einer viertel Stunde bis zu 10 Stunden durchgeführt.

Der Erfindung liegt die Aufgabe zugrunde, gegenüber den bekannten Verfahren eine weitergehende kationische Modifizierung von Stärke zu erreichen. Eine weitere Aufgabe der Erfindung liegt darin, gegenüber dem Stand der Technik verbesserte Trocken- und Naßfestigkeitsmittel für Papier zur Verfügung zu stellen.

Die Aufgabe wird erfindungsgemäß gelöst mit einem Verfahren zur kationischen Modifizierung von Stärke durch Umsetzung von Stärke mit Polymeren, die Amino- und/oder Ammoniumgruppen enthalten in wäßrigem Medium bei Temperaturen oberhalb der Verkleisterungstemperatur der Stärke in Abwesenheit von Oxidationsmitteln, Polymerisationsinitiatoren und Alkali, wenn man die Umsetzung in dem Temperaturbereich von 120 bis 145°C unter erhöhtem Druck in der Weise durchführt, daß man mindestens 90 Gew.-% der eingesetzten Stärke aufschließt und daß bei höchstens 10 Gew.-% der eingesetzten Stärke ein Molgewichtsabbau eintritt, wobei man als Stärke eine native Stärke aus der Gruppe Wachsmaisstärke, Washskartoffelstärke, Wachsweizenstärke oder Mischungen der genannten nativen Stärken einsetzt, die jeweils einen Amylopektingehalt von mindestens 95 Gew.-% hat.

Bevorzugt sind Stärken mit einem Gehalt an Amylopektin von mindestens 99 Gew.-%. Solche Stärken können durch Züchtungsmaßnahmen aus solchen Pflanzen gewonnen werden, die praktisch reine Amylopektinstärke produzieren, vgl. Günther Tegge, Stärke und Stärkederivate, Hamburg, Bers-Verlag 1984, Seiten 157-160. Stärken mit einem Amylopektingehalt von mindestens 95, vorzugsweise mindestens 99 Gew.-% sind auf dem Markt erhältlich. Sie werden als Wachsmaisstärke, Wachskartoffelstarke oder Wachsweizenstärke angeboten. Die genannten nativen Wachsstärken können entweder allein oder auch in Mischung bei dem erfindungsgemäßen Verfahren eingesetzt werden.

Für das erfindungsgemäße Verfahren eignen sich alle Polymeren, die Amino- und/oder Ammoniumgruppen enthalten. Diese Verbindungen werden im folgenden als kationische Polymere bezeichnet. Sie sind zum Teil aus den zum Stand der Technik genannten Literaturstellen bekannt, z.B. EP-B-0 282 761, EP-B-0 301 372 und EP-B-0 418 343.

Als kationische Polymerisate eignen sich beispielsweise Vinylamineinheiten enthaltende Homo- und Copolymerisate. Polymerisate dieser Art werden nach bekannten Verfahren durch Polymerisieren von N-Vinylcarbonsäureamiden der Formel 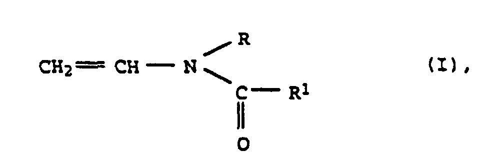 in der R, R¹=H oder C₁- bis C₆-Alkyl bedeutet, allein oder in Gegenwart von anderen damit copolymerisierbaren Monomeren und Hydrolyse der entstehenden Polymerisate mit Säuren oder Basen unter Abspaltung der Gruppierung 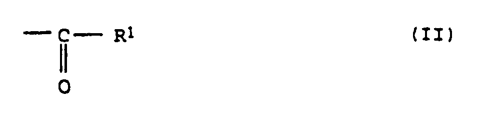 und unter Bildung von Einheiten der Formel 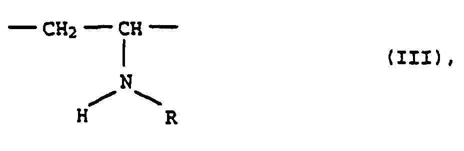 in der R die in Formel (I) angegebene Bedeutung hat, hergestellt.

Geeignete Monomere der Formel (I) sind beispielsweise N-Vinylformamid, N-Vinyl-N-methylformamid, N-Vinyl-N-ethylformamid, N-Vinyl-N-propylformamid, N-Vinyl-N-isopropylformamid, N-Vinyl-N-butylformamid, N-Vinyl-N-sek.butylformamid, N-Vinyl-N-tert.butyl-formamid, N-Vinyl-N-pentylformamid, N-Vinylacetamid, N-Vinyl-N-ethylacetamid und N-Vinyl-N-methylpropionamid. Vorzugsweise setzt man bei der Herstellung von Polymeren, die Einheiten der Formel (III) einpolymerisiert enthalten, N-Vinylformamid ein.

Die hydrolysierten Polymerisate, die Einheiten der Formel (III) enthalten, haben K-Werte von 15 bis 300, vorzugsweise 30 bis 200, bestimmt nach H. Fikentscher in 5 gew.-%iger wäßriger Kochsalzlösung bei pH 7, einer Temperatur von 25°C und einer Polymerkonzentration von 0,5 Gew.-%. Hydrolysierte Copolymerisate der Monomeren (I) enthalten beispielsweise
1) 99 bis 1 Mol-% N-Vinylcarbonsäureamide der Formel (I) und
2) 1 bis 99 Mol-% andere, damit copolymerisierbare monoethylenisch ungesättigte Monomere,
wie beispielsweise Vinylester von gesättigten Carbonsäuren mit 1 bis 6 Kohlenstoffatomen, z.B. Vinylformiat, Vinylacetat, Vinylpropionat und Vinylbutyrat. Geeignet sind auch ungesättigte C₃-bis C₆-Carbonsäuren, wie z.B. Acrylsäure, Methacrylsäure, Maleinsäure, Crotonsäure, Itaconsäure und Vinylessigsaure sowie deren Alkalimetall- und Erdalkalimetallsalze, Ester, Amide und Nitrile, beispielsweise Methylacrylat, Methylmethacrylat, Ethylacrylat und Ethylmethacrylat oder mit Glykol- bzw. Polyglykolestern ethylenisch ungesättigter Carbonsäuren, wobei jeweils nur eine OH-Gruppe der Glykole und Polyglykole verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie die Acrylsäuremonoester von Polyalkylenglykolen eines Molgewichts von 1.500 bis 10.000. Weiterhin sind geeignet die Ester von ethylenisch ungesättigten Carbonsäuren mit Aminoalkoholen, wie z.B. Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Diethylaminopropylmethacrylat, Dimethylaminobutylacrylat und Diethylaminobutylacrylat. Die basischen Acrylate werden in Form der freien Basen, der Salze mit Mineralsäuren wie z.B. Salzsäure, Schwefelsäure und Salpetersäure, der Salze mit organischen Säuren wie Ameisensäure oder Benzolsulfonsäure, oder in quaternisierter Form eingesetzt. Geeignete Quaternisierungsmittel sind beispielsweise Dimethylsulfat, Diethylsulfat, Methylchlorid, Ethylchlorid oder Benzylchlorid.

Außerdem eignen sich als Comonomere 2) ungesättigte Amide wie beispielsweise Acrylamid, Methacrylamid sowie N-Alkylmono- und -diamide mit Alkylresten von 1 bis 6 C-Atomen wie z.B. N-Methylacrylamid, N,N-Dimethylacrylamid, N-Methylmethacrylamid, N-Ethyl-acrylamid, N-Propylacrylamid und tert.Butylacrylamid sowie basische (Meth) acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

Weiterhin sind als Comonomere geeignet N-Vinylpyrrolidon, N-vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol, und N-Vinylimidazoline wie z.B. Vinylimidazolin, N-Vinyl-2-methylimidazolin, und N-Vinyl-2-ethylimidazolin. N-Vinylimidazole und N-Vinylimidazoline werden außer Form der freien Basen auch in mit Mineralsäuren oder organischen Säuren neutralisiert oder in quaternisierter Form eingesetzt, wobei die Quaternisierung vorzugsweise mit Dimethylsulfat, Diethylsulfat, Methylchlorid oder Benzylchlorid vorgenommen wird.

Außerdem kommen als Comonomere 2) Sulfogruppen enthaltende Monomere wie beispielsweise Vinylsulfonsäure, Allylsulfonsäure, Methallylsulfonsäure, Styrolsulfonsäure oder Acrylsäure-3-sulfopropylester in Frage.

Bei der Verwendung von basischen Comonomeren 2) wie z.B. basische Acrylester und -amide kann oftmals auf eine Hydrolyse der N-Vinylcarbonsäureamide verzichtet werden. Die Copolymerisate umfassen Terpolymerisate und solche Polymerisate, die zusätzlich mindestens ein weiteres Monomer einpolymerisiert enthalten.

Bevorzugt sind hydrolysierte Copolymerisate aus
1) N-Vinylformamid und
2) Vinylformiat, Vinylacetat, Vinylpropionat. Acrylnitril und N-Vinylpyrrolidon sowie hydrolysierte Homopolymerisate von N-Vinylformamid mit einem Hydrolysegrad von 2 bis 100, vorzugsweise 30 bis 95 Mol-%.

Bei Copolymerisaten, die Vinylester einpolymerisiert enthalten, tritt neben der Hydrolyse der N-Vinylformamideinheiten eine Hydrolyse der Estergruppen unter Bildung von Vinylalkoholeinheiten ein. Einpolymerisiertes Acrylnitril wird ebenfalls bei der Hydrolyse chemisch verändert, wobei z.B. Amid- und/oder Carboxylgruppen entstehen.

Als kationische Polymere kommen weiterhin Ethylenimin-Einheiten einpolymerisiert enthaltende Verbindungen in Betracht. Vorzugsweise handelt es sich hierbei um Polyethylenimine, die durch Polymerisieren von Ethylenimin in Gegenwart von sauren Katalysatoren wie Ammoniumhydrogensulfat, Salzsäure oder chlorierten Kohlenwasserstoffen wie Methylchlorid, Ethylenchlorid, Tetrachlorkohlenstoff oder Chloroform, erhältlich sind. Solche Polyethylenimine haben beispielsweise in 50 gew.-%iger wäßriger Lösung eine Viskosität von 500 bis 33.000, vorzugsweise 1.000 bis 31.000 mPa·s (gemessen nach Brookfield bei 20°C und 20 UPM). Zu den Polymeren dieser Gruppe gehören auch mit Ethylenimin gepfropfte Polyamidoamine, die gegebenenfalls noch durch Umsetzung mit einem mindestens bifunktionellen Vernetzer vernetzt sein können. Produkte dieser Art werden beispielsweise durch Kondensieren einer Dicarbonsäure wie Adipinsäure mit einem Polyalkylenpolyamin wie Diethylentriamin oder Triethylentetramin, Pfropfen mit Ethylenimin und Reaktion mit einem mindestens bifunktionellen Vernetzer, z.B. Bischlorhydrinäther von Polyalkylenglykolen hergestellt, vgl. US-A-4 144 123 und US-A-3 642 572.

Weiterhin kommen zur Stärkemodifizierung Polymerisate in Betracht, die als charakteristische Monomereinheit Diallyldimethylammoniumchlorid enthalten. Polymerisate dieser Art sind bekannt. Unter Polymerisaten des Diallyldimethylammoniumchlorids sollen in erster Linie Homopolymerisate sowie Copolymerisate mit Acrylamid und/oder Methacrylamid verstanden werden. Die Copolymerisation kann dabei in jedem beliebigen Monomerverhältnis vorgenommen werden. Der K-Wert der Homo- und Copolymerisate des Diallyldimethylammoniumchlorids beträgt mindestens 30, vorzugsweise 95 bis 180.

Als kationische Polymerisate eignen sich auch Homo- und Copolymerisate von gegebenenfalls substituierten N-Vinylimidazolinen. Es handelt sich hierbei ebenfalls um bekannte Stoffe. Sie können beispielsweise nach dem Verfahren der DE-B-1 182 826 dadurch hergestellt werden, daß man Verbindungen der Formel 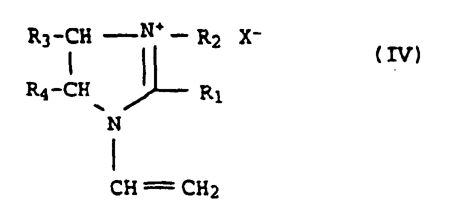 in der R₁, R₂=H, C₁- bis C₁₈-Alkyl, Benzyl, Aryl, R₃, R₄=H, C₁- bis C₄-Alkyl und X⁻ ein Säurerest bedeutet, gegebenenfalls zusammen mit Acrylamid und/oder Methacrylamid in wäßrigem Medium bei pH-Werten von 0 bis 8, vorzugsweise von 1,0 bis 6,8 in Gegenwart von Polymerisationsinitiatoren, die in Radikale zerfallen, polymerisiert.

Vorzugsweise setzt man bei der Polymerisation 1-Vinyl-2-imidazolin-Salze der Formel (V) ein, 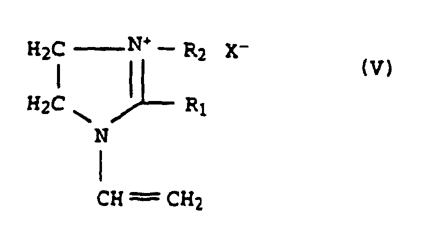 in der R₁, R₂=H, CH₃, C₂H₅, n- und i-C₃H₇, C₆H₅ und X⁻ ein Säurerest ist. X⁻ steht vorzugsweise für Cl⁻, Br, So₄²⁻, CH₃-O-SO₃⁻, R-COO⁻ und R₂=H, C₁- bis C₄-Alkyl und Aryl.

Der Substituent X- in den Formeln (IV) und (V) kann prinzipiell jeder beliebige Säurerest einer anorganischen sowie einer organischen Säure sein. Die Monomeren der Formel (IV) werden erhalten, indem man die freien Basen, d.h. 1-Vinyl-2-imidazoline, mit der äquivalenten Menge einer Säure neutralisiert. Die Vinylimidazoline können auch beispielsweise mit Trichloressigsäure, Benzolsulfonsäure oder Toluolsulfonsäure neutralisiert werden. Außer Salzen von 1-Vinyl-2-imidazolinen kommen auch quaternisierte 1-Vinyl-2-imidazoline in Betracht. Sie werden hergestellt, indem man 1-Vinyl-2-imidazoline, die gegebenenfalls in 2-, 4- und 5-Stellung substituiert sein können, mit bekannten Quatemisierungsmitteln umsetzt. Als Quatemisierungsmittel kommen beispielsweise C₁- bis C₁₈-Alkylchloride oder -bromide, Benzylchlorid oder -bromid, Epichlorhydrin, Dimethylsulfat und Diethylsulfat in Frage. Vorzugsweise verwendet man Epichlorhydrin, Benzylchlorid, Dimethylsulfat und Methylchlorid.

Zur Herstellung der wasserlöslichen Homopolymerisate werden die Verbindungen der Formeln (IV) oder (V) vorzugsweise in wäßrigem Medium polymerisiert.

Da die Verbindungen der Formel (IV) relativ teuer sind, verwendet man aus ökonomischen Gründen vorzugsweise als kationische Polymerisate Copolymerisatevon Verbindungen der Formel (IV) mit Acrylamid und/oder Methacrylamid. Diese Copolymerisate enthalten die Verbindungen der Formel (IV) dann lediglich in wirksamen Mengen, d.h. in einer Menge von 1 bis 50 Gew.-%, vorzugsweise 10 bis 40 Gew.-%. Für die Modifizierung nativer Stärken besonders geeignet sind Copolymerisate aus 60 bis 85 Gew.-% Acrylamid und/oder Methacrylamid und 15 bis 40 Gew.-% N-Vinylimidazolin oder N-Vinyl-2-methylimidazolin. Die Copolymerisate können weiterhin durch Einpolymerisieren von anderen Monomeren wie Styrol, N-Vinylformamid, Vinylformiat, Vinylacetat, Vinylpropionat, C₁- bis C₄-Alkylvinylether, N-Vinylpyridin, N-Vinylpyrrolidon, N-Vinylimidazol, ethylenisch ungesättigten C₃- bis C₅-Carbonsäuren sowie deren Ester, Amide und Nitrile, Natriumvinylsulfonat, Vinylchlorid und Vinylidenchlorid in Mengen bis zu 25 Gew.-% modifiziert werden. Besonders geeignet für die Modifizierung nativer Stärken sind Copolymerisate, die
1) 70 bis 97 Gew.-% Acrylamid und/oder Methacrylamid,
2) 2 bis 20 Gew.-% N-Vinylimidazolin oder N-Vinyl-2-methylimidazolin und
3) 1 bis 10 Gew.-% N-Vinylimidazol
einpolymerisiert enthalten. Diese Copolymerisate werden durch radikalische Copolymerisation der Monomeren 1), 2) und 3) nach bekannten Polymerisationsverfahren hergestellt. Sie haben K-Werte im Bereich von 80 bis 150 (bestimmt nach H. Fikentscher in 5 %iger wäßriger Kochsalzlösung bei 25°C und einer Polymerkonzentration von 0,5 Gew.-%).

Als kationische Polymerisate kommen des weiteren Copolymerisate aus 1 bis 99 Mol-%, vorzugsweise 30 bis 70 Mol-% Acrylamid und/ oder Methacrylamid und 99 bis 1 Mol-%, vorzugsweise 70 bis 30 Mol-% Dialkylaminoalkylacrylaten und/oder -methacrylaten in Frage, z.B. Copolymerisate aus Acrylamid und N,N-Dimethylaminoethylacrylat oder N,N-Diethylaminoethylacrylat. Basische Acrylate liegen vorzugsweise in mit Säuren neutralisierter oder in quaternisierter Form vor. Die Quaternisierung kann beispielsweise mit Methylchlorid oder mit Dimethylsulfat erfolgen. Die kationischen Polymerisate haben K-Werte von 30 bis 300, vorzugsweise 100 bis 180 (bestimmt nach H. Fikentscher in 5 %iger wäßriger Kochsalzlösung bei 25°C und einer Polymerkonzentration von 0,5 Gew.-%). Bei einem pH-Wert von 4,5 haben sie eine Ladungsdichte von mindestens 4 mVal/g Polyelektrolyt.

Geeignet sind auch Copolymerisate aus 1 bis 99 mol-%, vorzugsweise 30 bis 70 Mol-% Acrylamid und/oder Methacrylamid und 99 bis 1 Mol-%, vorzugsweise 70 bis 30 Mol-% Dialkylaminoalkylacrylamid und/oder -methacrylamid. Die basischen Acrylamide und Methacrylamide liegen ebenfalls vorzugsweise in mit Säuren neutralisierter oder in quaternisierter Form vor. Als Beispiele seien genannt N-Trimethylammoniumethylacrylamidchlorid, N-Trimethylammoniumethylmethacrylamidchlorid, Trimethylammoniumethylacrylamidmethosulfat, Trimethylammoniumethylmethacrylamidmethosulfat, N-Ethyldimethylammoniumethylacrylamidethosulfat, N-Ethyldimethylammoniumethylmethacrylamidethosulfat, Trimethylammoniumpropylacrylamidchlorid, Trimethylammoniumpropylmethacrylamidchlorid, Trimethylammoniumpropylacrylamidmethosulfat, Trimethylammoniumpropylmethacrylamidmethosulfat und N-Ethyldimethylammoniumpropylacrylamidethosulfat. Bevorzugt ist Trimethylammoniumpropylmethacrylamidchlorid.

Als kationische Polymere kommen auch Polyallylamine in Betracht. Polymerisate dieser Art werden erhalten durch Homopolymerisation von Allylamin, vorzugsweise in mit Säuren neutralisierter oder in quatemisierter Form oder durch Copolymerisieren von Allylamin mit anderen monoethylenisch ungesättigten Monomeren, entsprechend der zuvor beschriebenen Copolymeren mit N-Vinylcarbonsäureamiden. Bevorzugt sind Homo- und Copolymere des Diallyldimethylammoniumchlorids.

Zur erfindungsgemäßen kationischen Modifizierung von Stärke wird beispielsweise eine wäßrige Suspension mindestens einer Stärkesorte mit einem oder mit mehreren der kationischen Polymeren auf Temperaturen von 115 bis 180°C, vorzugsweise 120 bis 145°C unter erhöhtem Druck zur Umsetzung gebracht, wobei die Reaktion in der Weise geführt wird, daß bei höchstens 10 Gew.-% der Starke ein Molgewichtsabbau eintritt. Die wäßrigen Aufschlämmungen von Stärke enthalten beispielsweise auf 100 Gew.-Teile Wasser 0,1 bis 10, vorzugsweise 2 bis 6 Gew.-Teile Stärke. Auf 100 Gew.-Teile Stärke setzt man z.B. 0,1 bis 100, vorzugsweise 1 bis 10 Gew.-Teile mindestens eines kationischen Polymerisats ein. Als kationische Polymere kommen dabei vorzugsweise partiell oder vollständig hydrolysierte Homooder Copolymerisate von N-Vinylformamid, Polyethylenimine und/oder Polyallylamin in Betracht.

Beim Erhitzen der wäßrigen Stärkesuspensionen in Gegenwart von kationischen Polymeren wird zunächst die Stärke aufgeschlossen. Unter Stärkeaufschluß versteht man die Überführung der festen Stärkekörner in eine wasserlösliche Form, wobei Überstrukturen (Helixbildung, intramolekulare Wasserstoffbrücken usw.) aufgehoben werden, ohne daß es zum Abbau von den, die Starke aufbauenden Amylose- und/oder Amylopektineinheiten zu Oligosacchariden oder Glukose kommt. Die wäßrigen Stärkesuspensionen, die ein kationisches Polymer gelöst enthalten, werden bei der Umsetzung auf Temperaturen oberhalb der Verkleisterungstemperatur der Stärken erhitzt. Bei dem erfindungsgemäßen Verfahren wird die eingesetzte Stärke zu mindestens 90, vorzugsweise zu >95 Gew.-% aufgeschlossen und mit dem kationischen Polymerisat modifiziert. Die Stärke ist dabei klar gelöst. Vorzugsweise kann man nach der Umsetzung der Stärke aus der Reaktionslösung bei Verwendung einer Celluloseacetatmembran mit einem Porendurchmesser von 1,2 µm keine unumgesetzte Stärke mehr abfiltrieren.

Die Umsetzung erfolgt bei erhöhtem Druck. Hierbei handelt es sich üblicherweise um den Druck, den das Reaktionsmedium in dem Temperaturbereich von 120 bis 145°C entwickelt. Er liegt beispielsweise bei 1 bis 10, vorzugsweise 1,2 bis 7,9 bar. Während der Umsetzung wird das Reaktionsgemisch einer Scherung unterworfen. Falls man die Umsetzung in einem Rührautoklaven durchführt, rührt man das Reaktionsgemisch beispielsweise mit 100 bis 2.000, vorzugsweise 200 bis 1.000 Umdrehungen/Minute. Die Reaktion kann praktisch in allen Apparaturen durchgeführt werden, in denen Stärke in der Technik aufgeschlossen wird, z.B. in einem Jetkocher. Die Verweilzeiten des Reaktionsgemisches bei den erfindungsgemäß anzuwendenden Temperaturen von 120 bis 145°C betragen beispielsweise 0,1 Sekunden bis 1 Stunde und liegen vorzugsweise in dem Bereich von 0,5 Sekunden bis 30 Minuten.

Unter diesen Bedingungen werden zwar mindestens 90 % der eingesetzten Stärke aufgeschlossen und modifiziert, jedoch ist der Abbaugrad der Stärken (Molgewichtsabbau) gegenüber dem Stand der Technik wesentlich niedriger. Er beträgt höchstens 10 Gew.-% der eingesetzten Stärke. Vorzugsweise werden bei der erfindungsgemäßen Umsetzung weniger als 5 Gew.-% der Stärke abgebaut. Gelpermeationschromatographie-Analysen der Stärkenaufschlusse erlauben eine quantitative Verfolgung des Abbaugrads der Stärke. Der Grad des Stärkeaufschlusses vom angequollenen Stärkekorn bis zur vollständig gelösten Stärke kann mit Hilfe mikroskopischer und elektronenmikroskopischer Untersuchungen bestimmt werden.

Die nach dem erfindungsgemäßen Verfahren erhältlichen Umsetzungsprodukte haben beispielsweise bei einer Feststoffkonzentration von 3,5 Gew.-% eine Viskosität von 50 bis 10.000, vorzugsweise 80 bis 4.000 mPa·s, gemessen in einem Brookfield-Viskosimeter bei 20 Umdrehungen/Minute und einer Temperatur von 20°C. Der pH-Wert der Reaktionsmischungen liegt beispielsweise in dem Bereich von 2,0 bis 9,0, vorzugsweise 2,5 bis 8.

Die nach dem erfindungsgemäßen Verfahren erhältlichen modifizierten Stärken werden als Trockenverfestigungsmittel für Papier verwendet. Die erfindungsgemäß kationisierten Stärken werden vorzugsweise dem Papierstoff in einer Menge von 0,5 bis 3,5, insbesondere 1,2 bis 2,5 Gew.-%, bezogen auf trockenen Papierstoff, zugesetzt oder auf die Oberfläche eines bereits gebildeten Blattes aufgetragen. Vorzugsweise werden die erfindungsgemäß hergestellten modifizierten Stärken dem Papierstoff zugesetzt. Sie weisen eine gute Retention am Papierstoff auf und haben gegenüber bekannten modifizierten Stärken des Standes der Technik den Vorteil, daß bei ihrem Einsatz der CSB-Wert (chemischer Sauerstoff-bedarf) des Abwassers geringer ist.

Die erfindungsgemäß als Trockenverfestigungsmittel zu verwendenden Umsetzungsprodukte aus Stärken und kationischen Polymeren können bei der Herstellung von allen bekannten Papier-, Pappen- und Kartonqualitäten verwendet werden, z.B. Schreib-, Druck- und Verpackungspapieren. Die Papiere können aus einer Vielzahl verschiedenartiger Fasermaterialien hergestellt werden, beispielsweise aus Sulfit- oder Sulfatzellstoff in gebleichtem oder ungebleichtem Zustand, Holzschliff, Altpapier, thermomechanischem Stoff (TMP) und chemothermomechanischem Stoff (CTMP). Der pH-Wert der Stoffsuspension liegt z.B. zwischen 4 und 10, vorzugsweise zwischen 6 und 8,5. Die Trokkenverfestigungsmittel können sowohl bei der Herstellung von Rohpapier für Papiere mit geringem Flächengewicht (LWC-Papieren) sowie für Karton verwendet werden. Das Flächengewicht der Papiere beträgt zwischen 30 und 200, vorzugsweise 35 und 150 g/m², während es bei Karton bis zu 600 g/m² betragen kann. Die erfindungsgemäß hergestellten Papierprodukte haben gegenüber solchen Papieren, die in Gegenwart einer gleichen Menge nativer Stärke hergestellt wurden, eine merklich verbesserte Festigkeit, die beispielsweise anhand der Reißlänge, des Berstdrucks, des CMT-Werts und des Weiterreißwiderstands quantitativ erfaßt werden kann.

Die in den Beispielen angegebenen Teile sind Gewichtsteile, die Prozentangaben beziehen sich auf das Gewicht. Die Viskositäten der Verfestiger wurden in wäßriger Lösung bei einer Feststoffkonzentration von 3,5 Gew.-% und einer Temperatur von 20°C in einem Brookfield-Viskosimeter bei 20 Upm bestimmt.

Die Blätter wurden in einem Rapid-Köthen-Laborblattbildner hergestellt. Die Trockenreißlänge wurde gemäß DIN 53 112, Blatt 1 und der Trockenberstdruck nach Mullen, DIN 53141 bestimmt.

Die Prüfung der Blätter erfolgte jeweils nach einer 24-stündigen Klimatisierung bei einer Temperatur von 23°C und einer relativen Luftfeuchtigkeit von 50 %.

Der K-Wert der Polymerisate wurde nach H. Fikentscher, Cellulose-Chemle, Band 13, Seiten 58-64 und 71-74, (1932), bei einer Temperatur von 25°C in 5 %iger Kochsalzlösung und einer Polymerkonzentration von 0,5 Gew.-% bestimmt. Dabei bedeutet K=kx10³.

### Beispiele

### Polymer 1

Homopolymerisat aus N-Vinylformamid mit einem K-Wert von 85, aus dem 95 % der Formylgruppen durch Hydrolyse mit Salzsäure abgespalten wurden, in 12 %iger wäßriger Lösung mit pH-Wert 5.

### Polymer 2

Hochmolekulares Polyethylenimin in 50 %iger wäßriger Lösung mit einer Viskosität von 28.000 mPa·s.

### Verfestiger 1 (Vergleich)

Eine 3 %ige Aufschlämmung von nativer Kartoffelstärke in Wasser wird mit einer 50 %igen wäßrigen Lösung von Polymer 1 versetzt, so daß die resultierende Mischung 10 Gew.-% Polymer 1, bezogen auf die eingesetzte native Stärke, enthält. Die Mischung wird 20 min lang unter Rühren mit 500 Upm bei einer Temperatur von 130°C und einem Druck von 2,7 bar erhitzt und nach dem Abkühlen auf eine Temperatur von 25°C erfindungsgemäß als Trockenverfestigungsmittel für Papier verwendet. Der Molekulargewichtsabbau der Stärke liegt bei <5 %. Mikroskopische bzw. elektronenmikroskopische Untersuchungen zeigen, daß keine grobkörnigen bzw. angequollenen Stärkekörner mehr vorhanden sind, d.h. die Stärke war vollständig aufgeschlossen.

### Verfestiger 2 (Vergleich)

Wie bei Verfestiger 1 beschrieben wird ein Trockenverfestigungsmittel hergestellt, indem man Polymer 1 mit nativer Maisstärke umsetzt. Der Molekulargewichtsabbau der Stärke lag unterhalb von 4 %. Die Stärke war praktisch vollständig aufgeschlossen.

### Verfestiger 3 (Vergleich)

Wie bei Verfestiger 1 beschrieben wird ein Trockenverfestigungsmittel hergestellt, indem man Polymer 1 mit nativer Maisstärke umsetzt, wobei 97 % der Stärke aufgeschlossen waren und 3 % der Stärke einen Molekulargewichtsabbau erfahren haben.

### Beispiel 1 (Verfestiger 4)

Wie bei Verfestiger 1 beschrieben wird ein Trockenverfestigungsmittel hergestellt, indem man Polymer 1 mit nativer Wachsmaisstärke umsetzt, wobei 2 % der Stärke abgebaut und 98 % der Stärke aufgeschlossen waren.

### Beispiel 2 (Verfestiger 5)

Wie bei Verfestiger 1 beschrieben wird ein Trockenverfestigungsmittel hergestellt, indem man Polymer 1 mit nativer Wachskartoffelstarke umsetzt, wobei 4 % der Stärke abgebaut und 96 % der Stärke aufgeschlossen waren.

### Beispiel 3 (Verfestiger 6)

Wie bei Verfestiger 1 beschrieben wird ein Trockenverfestigungsmittel hergestellt, indem man anstelle des dort beschriebenen Polymeren 1 nun Polymer 2 mit nativer Wachskartoffelstarke umsetzt, wobei 3 % der Stärke abgebaut und 97 % der Stärke aufgeschlossen waren.

### Verfestiger 7 (Vergleich)

Wie bei Verfestiger 1 beschrieben wird ein Trockenverfestigungsmittel hergestellt, indem man Polymer 2 mit nativer Maisstärke umsetzt, wobei 2 % der Stärke abgebaut und 98 % der Stärke aufgeschlossen waren.

### Verfestiger 8 (Vergleich)

Wie bei Verfestiger 1 beschrieben wird ein Trockenverfestigungsmittel hergestellt, indem man Polymer 2 mit nativer Weizenstärke umsetzt, wobei 1 % der Stärke abgebaut und 99 % der Stärke aufgeschlossen waren.

### Beispiel 4 (Verfestiger 9)

Wie bei Verfestiger 1 beschrieben wird ein Trockenverfestigungsmittel hergestellt, indem man Polymer 2 mit nativer Wachsmaisstärke umsetzt, wobei 2 % der Stärke abgebaut und 98 % der Stärke aufgeschlossen waren.

### Beispiel 5 (Verfestiger 10)

Wie bei Verfestiger 1 beschrieben wird ein Trockenverfestigungsmittel hergestellt, indem man Polymer 2 mit nativer Wachskartoffelstarke umsetzt, wobei 4 % der Stärke abgebaut und 96 % der Stärke aufgeschlossen waren.

### Verfestiger 11 (Vergleich)

Gemäß EP-B-0 282 761, Beispiel 7, wird ein Trockenverfestigungsmittel hergestellt, indem man Polymer 1 nach dem dort beschriebenen Verfahren mit nativer Kartoffelstärke umsetzt. Der Abbaugrad der Stärke lag unterhalb von 5 %, nur 65 % der Stärke waren aufgeschlossen.

### Verfestiger 12 (Vergleich)

Gemäß DE-A-3 719 480, Beispiel 1, wird ein Trockenverfestigungsmittel hergestellt, indem man Polymer 2 nach dem dort beschriebenen Verfahren mit nativer Kartoffelstärke umsetzt. Der Abbaugrad der Stärke lag unterhalb von 4 %, nur 68 % der Stärke waren aufgeschlossen.

### Vergleichsbeispiel V1

In einem Rapid-Köthen-Blattbildner werden Blätter vom Flächengewicht 120 g/m³ hergestellt. Der Papierstoff besteht aus 80 % gemischtem Altpapier und 20 % gebleichtem Buchensulfitzellstoff, der auf 50° Schopper-Riegler gemahlen ist und zu dem der oben beschriebene Verfestiger 1 in einer Menge zugesetzt wird, daß der Feststoffgehalt an Verfestiger 1, bezogen auf trockenen Papierstoff 2,2 % beträgt. Der pH-Wert der Stoffsuspension wird auf 7,5 eingestellt. Die aus diesem Stoffmodell hergestellten Blätter werden klimatisiert und danach die Trockenreißlänge und der Trokkenberstdruck nach den oben angegebenen Methoden gemessen. Die Ergebnisse sind in Tabelle 1 angegeben.

### Vergleichsbeispiele V2 bis V5 , Beispiele 6 bis 10

Das Vergl. Bsp. V1 wird mit der Ausnahme wiederholt, daß man anstelle des darin beschriebenen Verfestigungsmittels die in Tabelle 1 angegebenen Verfestigungsmittel einsetzt. Die so erhaltenen Ergebnisse sind in Tabelle 1 angegeben.

### Vergleichsbeispiel V6

Das Vergl. Bsp. V1 wird mit der Ausnahme wiederholt, daß man anstelle des darin beschriebenen Verfestigungsmittels sukzessive 3 % aufgeschlossene native Maisstärke und 0,3 % Polymer 1 einsetzt. Die so erhaltenen Ergebnisse sind in Tabelle 1 angegeben.

### Vergleichsbeispiel V7

Das Vergl. Bsp. V1 wird mit der Ausnahme wiederholt, daß man anstelle des darin beschriebenen Verfestigungsmittels sukzessive 3 % aufgeschlossene native Wachsmaisstärke und 0,3 % Polymer 1 einsetzt. Die so erhaltenen Ergebnisse sind in Tabelle 1 angegeben.

### Vergleichsbeispiel V8

Das Vergl. Bsp. V1 wird mit der Ausnahme wiederholt, daß man anstelle des darin beschriebenen Verfestigungsmittels sukzessive 3 % aufgeschlossene native Kartoffelstärke und 0,3 % Polymer 2 einsetzt. Die so erhaltenen Ergebnisse sind in Tabelle 1 angegeben.

### Vergleichsbeispiel V9

Das Vergl. Bsp. V1 wird mit der Ausnahme wiederholt, daß man anstelle des darin beschriebenen Verfestigungsmittels sukzessive 3 % aufgeschlossene native Weizenstärke und 0,3 % Polymer 2 einsetzt. Die so erhaltenen Ergebnisse sind in Tabelle 1 angegeben.

### Vergleichsbeispiel 10

Das Vergl. Bsp. V1 wird mit der Ausnahme wiederholt, daß man anstelle des darin beschriebenen Verfestigungsmittels den Verfestiger 11 einsetzt. Die so erhaltenen Ergebnisse sind in Tabelle 1 angegeben.

### Vergleichsbeispiel 11

Das Vergl. Bsp. V1 wird mit der Ausnahme wiederholt, daß man anstelle des darin beschriebenen Verfestigungsmittels den Verfestiger 12 einsetzt. Die so erhaltenen Ergebnisse sind in Tabelle 1 angegeben.

### Vergleichsbeispiel 12

Das Vergl. Bsp. V1 wird mit der Ausnahme wiederholt, daß man anstelle des darin beschriebenen Verfestigungsmittels 3 % handelsübliche kationisierte Stärke Hl-CAT (Roquette) einsetzt. Die so erhaltenen Ergebnisse sind in Tabelle 1 angegeben.

### Vergleichsbeispiel 13

Das Vergl. Bsp. V1 wird mit der Ausnahme wiederholt, daß man anstelle des darin beschriebenen Verfestigungsmittels allein 3 % native Kartoffelstärke, bezogen auf trockenen Faserstoff, einsetzt. Die so erhaltenen Ergebnisse sind in Tabelle 1 angegeben.

### Vergleichsbeispiel 14

Das Vergl. Bsp. V1 wird mit der Ausnahme wiederholt, daß man anstelle des darin beschriebenen Verfestigungsmittels allein 3 % native Maisstärke, bezogen auf trockenen Faserstoff, einsetzt. Die so erhaltenen Ergebnisse sind in Tabelle 1 angegeben.

### Vergleichsbeispiel 15

Das Vergl. Bsp. V1 wird mit der Ausnahme wiederholt, daß man anstelle des darin beschriebenen Verfestigungsmittels allein 3 % native Washsmaisstarke einsetzt. Die so erhaltenen Ergebnisse sind in Tabelle 1 angegeben.

### Vergleichsbeispiel 16

Das Vergl. Bsp. V1 wird mit der Ausnahme wiederholt, daß man anstelle des darin beschriebenen Verfestigungsmittels allein 3 % native Weizenstärke einsetzt. Die so erhaltenen Ergebnisse sind in Tabelle 1 angegeben.

### Vergleichsbeispiel 17

Das Vergl. Bsp. V1 wird mit der Ausnahme wiederholt, daß man anstelle des darin beschriebenen Verfestigungsmittels allein 3 % Polymer 1 einsetzt. Die so erhaltenen Ergebnisse sind in Tabelle 1 angegeben.

### Vergleichsbeispiel 18

Das Vergl. Bsp. V1 wird mit der Ausnahme wiederholt, daß man anstelle des darin beschriebenen Verfestigungsmittels allein 3 % Polymer 2 einsetzt. Die so erhaltenen Ergebnisse sind in Tabelle 1 angegeben.

### Vergleichsbeispiel 19

Das Vergl. Bsp. V1 wird mit der Ausnahme wiederholt, daß man kein Verfestigungsmittel zusetzt. Die so erhaltenen Ergebnisse sind in Tabelle 1 angegeben.

**Tabelle 1**

| Beispiel | zum Papierstoff zugesetzter Verfestiger | Trockenreißlänge [m] | Trockenberstdruck [kPa] |
|---|---|---|---|
| V1 | 1 | 3556 | 248 |
| V2 | 2 | 3642 | 248 |
| V3 | 3 | 3704 | 260 |
| 6 | 4 | 3748 | 255 |
| 7 | 5 | 3796 | 257 |
| 8 | 6 | 3549 | 239 |
| V4 | 7 | 3283 | 225 |
| V5 | 8 | 3344 | 223 |
| 9 | 9 | 3425 | 233 |
| 10 | 10 | 3602 | 244 |
| V6 | Polymer 1/Maisstärke | 3057 | 200 |
| V7 | Polymer 1/Wachsmaisstärke | 3069 | 206 |
| V8 | Polymer 1/Kartoffelstärke | 3162 | 211 |
| V9 | Polymer 2/Weizenstärke | 2225 | 202 |
| Vergl.bsp. 10 | 11 | 3037 | 173 |
| Vergl.bsp. 11 | 12 | 3186 | 167 |
| Vergl.bsp. 12 | HI-CAT (Roquette) | 2954 | 215 |
| Vergl.bsp. 13 | Kartoffelstarke | 3055 | 193 |
| Vergl.bsp. 14 | Maisstärke | 3111 | 205 |
| Vergl.bsp. 15 | Wachsmaisstärke | 3147 | 195 |
| Vergl.bsp. 16 | Weizenstärke | 3047 | 192 |
| Vergl.bsp. 17 | Polymer 1 | 3015 | 191 |
| Vergl.bsp. 18 | Polymer 2 | 2835 | 178 |
| Vergl.bsp. 19 | ohne | 2607 | 173 |
| V = Vergleichsbeispiel | | | |

## Patentansprüche

1. Verfahren zur kationischen Modifizierung von Stärke durch Umsetzung von Stärke mit Polymeren, die Aminound/oder Ammoniumgruppen enthalten, in wässrigem Medium bei Temperaturen oberhalb der Verkleisterungstemperatur der Stärke in Abwesenheit von Oxidationsmitteln, Polymerisationsinhibitoren und Alkali, **dadurch gekennzeichnet, dass** man die Umsetzung in einem Temperaturbereich von 120 bis 145°C unter erhöhtem Druck in der Weise durchführt, dass man mindestens 90 Gew.-% der eingesetzten Stärke aufschließt und dass bei höchstens 10 Gew.-% der Stärke ein Molekulargewichtsabbau eintritt, wobei man als Stärke eine native Stärke aus der Gruppe Wachsmaisstärke, Wachskartoffelstärke, Wachsweizenstärke oder Mischungen der genannten nativen Stärken einsetzt die jeweils einen Amylopektingehalt von mindestens 95 Gew.-% haben.

2. Verfahren nach Anspruch 1, **dadurch gekennzeichnet, dass** man auf 100 Gew.-Teile Stärke 1 bis 10 Gew.-Teile mindestens eines kationischen Polymerisats einsetzt.

3. Verfahren nach einem der Ansprüche 1 oder 2, **dadurch gekennzeichnet, dass** man als kationisches Polymer partiell oder vollständig hydrolysierte Homo- und Copolymerisate von N-Vinylformamid, Polyethylenimine und/oder Polyallylamine einsetzt.

4. Verwendung der nach dem Verfahren der Ansprüche 1 bis 3 erhältlichen, modifizierten Stärken als Trockenverfestigungsmittel für Papier.

## Claims

1. A process for cationically modifying starch by reacting starch with polymers which contain amino and/or ammonium groups in an aqueous medium at above the glutinization temperature of the starch in the absence of oxidizing agents, polymerization initiators and alkali, **characterized in that** the reaction is carried out at from 120 to 145°C under superatmospheric pressure in a manner such that at least 90% by weight of the starch used is digested and a reduction in molecular weight occurs in not more than 10% by weight of the starch used, the starch used being a natural starch selected from the group consisting of waxy cornstarch, waxy potato starch, waxy wheat starch or a mixture of the stated natural starches which in each case have an amylopectin content of at least 95% by weight.

2. A process as claimed in claim 1, **characterized in that** from 1 to 10 parts by weight of at least one cationic polymer are used per 100 parts by weight of starch.

3. A process as claimed in either of claims 1 and 2, **characterized in that** the cationic polymer used is partially or completely hydrolyzed homo- and copolymers of N-vinylformamide, polyethyleneimine and/or polyallylamines.

4. The use of the modified starches obtainable by the process of claims 1 to 3 as dry strength agents for paper.

## Revendications

1. Procédé de modification cationique d'amidon par réaction d'amidon avec des polymères contenant des groupes amino et/ou ammonium, en milieu aqueux à des températures supérieures à la température de gélatinisation de l'amidon, en l'absence d'oxydants, d'inhibiteurs de polymérisation et d'une base, **caractérisé en ce qu'**on met en oeuvre la réaction dans la plage de températures de 120 à 195°C sous pression élevée, en attaquant au moins 90 % en poids de l'amidon utilisé et en procédant à une diminution de la masse moléculaire d'au plus 10 % en poids de l'amidon, auquel cas on utilise en tant qu'amidon un amidon natif choisi dans l'ensemble comprenant l'amidon de maïs visqueux, l'amidon de pomme de terre visqueux, l'amidon de blé visqueux, ou des mélanges des amidons natifs mentionnés, dont chacun à une teneur en amylopectine d'au moins 95 % en poids.

2. Procédé selon la revendication 1, **caractérisé en ce qu'**on utilise, pour 100 parties en poids d'amidon, 1 à 10 parties en poids d'au moins un polymère cationique.

3. Procédé selon l'une des revendications 1 ou 2, **caractérisé en ce qu'**on utilise en tant que polymère cationique, des homo- ou copolymères partiellement ou complètement hydrolysés de N-vinylformamide, de polyéthylène-imine et/ou de polyallylamine.

4. Utilisation des amidons modifiés pouvant être obtenus par le procédé selon l'une des revendications 1 à 3 en tant qu'agent de renfort à sec pour papier.
